# EUROPÄISCHE PATENTSCHRIFT

(11) **EP 3 818 276 B1**
(45) Veröffentlichungstag und Bekanntmachung des Hinweises auf die Patenterteilung: **19.03.2025**
(21) Anmeldenummer: 18748859.8
(22) Anmeldetag: 05.07.2018
(51) Int. Cl.: F16D 3/2237, F16D 3/223

(54) **GLEICHLAUFGELENK**
HOMOCINETIC JOINT
JOINT HOMOCINÉTIQUE

(43) Veröffentlichungstag der Anmeldung: 12.05.2021
(73) Patentinhaber: GKN Driveline International GmbH, 53797 Lohmar (DE)
(72) Erfinder: MAUCHER, Stephan, 53721 Siegburg (DE); GREMMELMAIER, Anna, 53757 Sankt Augustin (DE); HILDEBRANDT, Wolfgang, 53721 Siegburg (DE); WECKERLING, Thomas, 53757 Sankt Augustin (DE)
(74) Vertreter: Neumann Müller Oberwalleney Patentanwälte PartG mbB
(86) Internationale Anmeldenummer: PCT/EP2018/068263
(87) Internationale Veröffentlichungsnummer: WO 2020/007475

(56) Entgegenhaltungen:
- WO-A1-00/31427
- WO-A1-2007/028436
- WO-A1-2014/154838
- US-A1- 2017 037 909

## Beschreibung

Die Erfindung betrifft ein Gleichlaufgelenk zur Drehmomentübertragung, mit einem Gelenkaußenteil mit äußeren Kugelbahnen, einem Gelenkinnenteil mit inneren Kugelbahnen, drehmomentübertragenden Kugeln, die in Paaren von äußeren und inneren Kugelbahnen geführt werden, und einem Kugelkäfig, der die Kugeln in umfangsverteilten Fenstern aufnimmt und in einer gemeinsamen Ebene hält. Gleichlaufgelenke ermöglichen eine Drehmomentübertragung zwischen Gelenkaußenteil und Gelenkinnenteil unter Winkelbewegung.

Grundsätzlich werden Gleichlaufgelenke in Form von Festgelenken und Verschiebegelenke unterschieden. Bei Gleichlauffestgelenken sind im Wesentlichen nur eine Winkelbeweglichkeit zwischen Gelenkaußenteil und Gelenkinnenteil vorgesehen, das heißt abgesehen von üblichen Toleranzen keine axialen Bewegungen. Gleichlaufverschiebegelenke ermöglichen neben Winkelbewegungen demgegenüber auch axiale Verschiebebewegungen zwischen Gelenkaußenteil und Gelenkinnenteil.

Aus der DE 10 2012 102 678 A1 ist ein Gleichlaufgelenk in Form eines Festgelenks bekannt. In jeder Winkelstellung des Gleichlaufgelenks ist ein Maulöffnungswinkel zwischen einer äußeren Tangente und einer inneren Tangente an eine Kugel eingeschlossen. Die Bahnpaare sind derart gestaltet, dass innerhalb eines kleinen Beugewinkelbereichs bei zumindest einem Gelenkbeugewinkel ein Maulöffnungswinkel Null beträgt und innerhalb eines größeren Beugewinkelbereichs, ein öffnungsseitiger Maulöffnungswinkel einer sich zur Öffnungsseite des Gelenkaußenteils bewegenden Kugel und ein anschlussseitiger Maulöffnungswinkel einer sich bei demselben Gelenkbeugewinkel zur Anschlussseite des Gelenkaußenteils bewegenden Kugel ungleich Null sind und sich in dieselbe axiale Richtung öffnen.

Aus der WO 2007/028436 A1 ist ein Gegenbahngelenk mit Axialspiel bekannt. Das Gegenbahngelenk hat in gestrecktem Zustand und in einer mittleren Position der relativen Axialverschiebung zwischen Gelenkaußenteil und Gelenkinnenteil Öffnungswinkel der ersten und zweiten Bahnpaare, die kleiner als 8° sind.

Aus der EP 0 802 341 A1 ist ein Gleichlaufgelenk in Form eines Festgelenks mit acht drehmomentübertragenden Kugeln bekannt. Die aus jeweils einer äußeren Kugelbahn und einer inneren Kugelbahn bestehenden Bahnpaare öffnen sich zur Öffnungsseite des Gelenks. In einer Ausführungsform haben die Kugelbahnen einen einheitlichen Radius über der Länge. In einer anderen Ausführungsform setzen sich die Kugelbahnen aus einem Radius und einer daran anschließenden Gerade zusammen; derartige Gleichlaufgelenke werden auch als hinterschnittfreie Gelenke (UF-Gelenke) bezeichnet.

Aus der US 2010 190 558 A1 ist ein Gleichlaufdrehgelenk in Form eines Festgelenks bekannt. In einer Ausführungsform ist vorgesehen, dass die Kugelbahnen des Gelenkaußenteils zwei Kreisbogenabschnitte mit unterschiedlichen Mittelpunkten und einen dazwischenliegenden geraden Abschnitt umfassen. Der gerade Abschnitt schließt tangential an die beiden Kreisbogenabschnitte an. Die Kreisbogenabschnitte sind so gestaltet, dass bei Abwinklung des Gelenks ein Maulöffnungswinkel an die in Richtung Öffnungsseite wandernde Kugel und ein Maulöffnungswinkel an die in Richtung Gelenkboden wandernde Kugel sich in entgegengesetzte axiale Richtungen öffnen.

Aus der US 8 267 802 B2 ist ein Gleichlauffestgelenk bekannt, bei dem die Mittelpunkte der äußeren und inneren Kugelbahnen gegenüber einem Sphärenflächenmittelpunkt versetzt sind. Das Verhältnis eines Axialversatzes (F) relativ zum Rollkreisradius (PCR) liegt zwischen 0,045 und 0,065. Es ist ferner ein Gleichlauffestgelenk mit gekrümmtem Bahnabschnitt und geradem Bahnabschnitt bekannt, die in der Gelenkmittelebene ineinander übergehen. Weiter ist ein Gleichlauffestgelenk mit einheitlich gekrümmtem Bahnabschnitt über der gesamten Bahnlänge bekannt.

Bei der Konstruktion von Gleichlaufgelenken sind diverse, sich zum Teil widersprechende Anforderungen zu erfüllen. So ist es ein wichtiges Ziel, dass Reaktionskräfte der im Betrieb zusammenwirkenden Gelenkbauteile möglichst gering sind, um Verlustleistungen zu minimieren beziehungsweise den Wirkungsgrad des Gelenks zu maximieren. Gleichzeitig soll das Gleichlaufgelenk in allen bei Betrieb auftretenden Winkelpositionen zuverlässig und möglichst verschleißfrei arbeiten.

Der vorliegenden Erfindung liegt daher die Aufgabe zugrunde, ein Gleichlaufgelenk vorzuschlagen, das eine zuverlässige Käfigsteuerung auch bei kleinen Beugewinkeln ermöglicht und bei dem nur geringe Reaktionskräfte zwischen den in Kontakt stehenden Gelenkteilen auftreten, so dass Reibungsverluste entsprechend gering sind.

Zur Lösung wird ein Gleichlaufgelenk mit den Merkmalen gemäß Anspruch 1 vorgeschlagen.

Ein Vorteil dieses Gleichlaufgelenks ist, dass auch bei kleinen Beugewinkeln von bis zu fünfzehn Grad um die Gelenkmittelebene eine zuverlässige Käfigsteuerung des Kugelkäfigs gewährleistet ist. Aufgrund der verhältnismäßig geringen Maulöffnungswinkel (δ) treten nur geringe Reaktionskräfte zwischen den in Kontakt stehenden Gelenkteilen auf, so dass Reibungsverluste entsprechend gering sind.

Bei Rotation des Gleichlaufgelenks unter Abwicklung wandern die drehmomentübertragenden Kugeln entlang der Kugelbahnen. Dabei wird, in der Gelenkbeugeebene betrachtet, die sich zur Öffnungsseite des Gelenkaußenteils bewegende Kugel in einen öffnungsseitigen Bahnabschnitt des Gelenkaußenteils und in einen anschlussseitigen Bahnabschnitt des Gelenkinnenteils geführt. Die sich, in der Gelenkbeugeebene betrachtet, zur Anschlussseite des Gelenkaußenteils bewegende Kugel wird in einen anschlussseitigen Bahnabschnitt des Gelenkaußenteils und in einen öffnungsseitigen Bahnabschnitt des Gelenkinnenteils geführt.

Die Maulöffnungswinkel sind zwischen einer äußeren Tangente an die äußere Kugelbahn und einer inneren Tangente an die innere Kugelbahn, jeweils im Kontaktbereich mit der in der äußeren und inneren Kugelbahn geführten Kugel definiert. Dabei bezieht sich der Maulöffnungswinkel auf die Gelenkbeugeebene, welche von den Längsachsen des Gelenkaußenteils und Gelenkinnenteils aufgespannt wird, bzw. auf ein in der Gelenkbeugeebene liegendes Bahnpaar mit darin aufgenommener Kugel. Der Kontaktbereich zwischen Kugel und Kugelbahn kann dabei unmittelbar in der Gelenkbeugeebene liegen, beispielsweise bei kreisförmigem Bahnquerschnitt, dessen Querschnittsradius dem Radius der Kugel entspricht, oder in zur Gelenkbeugeebene parallel versetzten Ebenen, welche durch die Kugelkontaktlinien zwischen Kugel und Kugelbahnen aufgespannt werden, beispielsweise bei einem von der Kreisform abweichenden Querschnitt der Kugelbahnen. In letzterem Fall werden die Projektionen der an die jeweilige Kugelbahn angelegten Tangenten in der Gelenkbeugeebene betrachtet, welche den Maulöffnungswinkel einschließen.

Die zumindest eine Kugelbahn ist so gestaltet, dass der Maulöffnungswinkel (δ) bei gestrecktem Gelenk (β = 0°) größer null Grad ist (δ > 0°), insbesondere größer als ein Grad ist (δ > 1 °). Vorzugsweise ist der Maulöffnungswinkel (δ) bei gestrecktem Gelenk (β = 0°) kleiner als acht Grad (δ < 8°), insbesondere kleiner sechs Grad (δ < 6°). Durch einen verhältnismäßig kleinen Maulöffnungswinkel bei gestrecktem Gelenk sind die zwischen den Kugelbahnen und den Kugeln entlang der Kugelbahnen wirksamen Axialkräfte gering.

Ausgehend von der gestreckten Lage des Gelenks bzw. der Gelenkmittelebene nimmt der Maulöffnungswinkel mit zunehmender Abwinkelung des Gelenks im Wesentlichen zu. Dabei ist das zumindest eine Bahnpaar so gestaltet, dass der Maulöffnungswinkel (δ) innerhalb des ersten Beugewinkelbereichs um vorzugsweise mindestens zwei Grad zunimmt. Das zumindest eine Bahnpaar hat einen an den zentralen Beugewinkelbereich anschließenden zweiten Beugewinkelbereich. Der zweite Beugewinkelbereich umfasst Beugewinkel (β), die betragsmäßig größer sind als 15°, das heißt, die kleiner sind als minus 15° oder größer sind als plus 15° (β = 0°± 15°). Es ist insbesondere vorgesehen, dass zumindest ein Maulöffnungswinkel (δ) innerhalb des zweiten Beugewinkelbereichs größer ist als ein größter Maulöffnungswinkel des zentralen Beugewinkelbereichs.

Von dem Gleichlaufgelenk hat zumindest eines der Bahnpaare die erfindungsgemäße Form mit einem Maulöffnungswinkel von größer null Grad bei gestrecktem Gelenk und einem um mindestens 2° zunehmendem Maulöffnungswinkel im zentralen Beugewinkelbereich. Hiermit ist mit umfasst, dass auch zwei oder mehr Bahnpaare die genannte Ausgestaltung aufweisen, wobei die Anzahl der Kugeln bzw. Bahnpaare vorzugsweise gerade ist und sich jeweils zwei Bahnpaare mit der genannten Ausgestaltung einander diametral gegenüberliegen. Es versteht sich insofern, dass - soweit im Rahmen der vorliegenden Offenbarung von zumindest einem, einem bzw. dem Bahnpaar die Rede ist - das jeweils beschriebene Merkmal auch auf ein, mehrere oder alle Bahnpaare bezogen sein kann.

Die zumindest eine Kugelbahn ist im zumindest im zentralen Beugewinkelbereich so gestaltet, dass die Maulöffnungswinkel im öffnungsseitigen Kugelbahnabschnitt und im anschlussseitigen Kugelbahnabschnitt in dieselbe axiale Richtung weisen. Mit in dieselbe axiale Richtung weisenden Maulöffnungswinkeln ist gemeint, dass die in der Gelenkbeugeebene auf eine in Richtung Anschlussseite wandernde Kugel von den äußeren und inneren Kugelbahnen einwirkenden resultierende Kraft eine Axialkraftkomponente aufweist, die in dieselbe axiale Richtung weist, wie die resultierende Axialkraftkomponente, die auf eine in Richtung Öffnungsseite wandernde Kugel einwirkt. Durch diese Ausgestaltung wird erreicht, dass der Kugelkäfig zumindest näherungsweise auf die winkelhalbierende Ebene gesteuert wird. Falls vorhanden, weisen auch die übrigen Bahnpaare Maulöffnungen auf, die vorzugsweise in dieselbe axiale Richtung weisen, wie die Maulöffnungen der erfindungsgemäßen Bahnpaare. Vorzugsweise sind alle Bahnpaare so gestaltet, dass sich die Maulöffnungswinkel δ aller Kugeln bei Abwinklung des Gelenks, jeweils in der Gelenkbeugeebene betrachtet, sich in dieselbe axiale Richtung öffnen. Dies gilt vorzugsweise auch für den an den zentralen Beugewinkelbereich anschließenden zweiten Beugewinkelbereich. Weiter ist für eine günstige Fertigung vorzugsweise vorgesehen, dass alle äußeren Kugelbahnen untereinander gleich und alle inneren Kugelbahnen untereinander gleich gestaltet sind.

Die Anzahl der Bahnpaare bzw. der drehmomentübertragenden Kugeln kann unter Berücksichtigung der spezifischen Anforderungen an das Gleichlaufgelenk beliebig gewählt werden. Im Antriebsstrang eines Kraftfahrzeugs kommen in der Regel Gleichlaufgelenke mit sechs oder acht Kugeln zum Einsatz, wobei beliebige andere Zahlen, auch eine ungerade Anzahl, ebenso denkbar sind. Bei einem beispielhaften Gelenk mit acht Bahnpaaren und acht Kugeln ist der Maulöffnungswinkel (δ) in dem zentralen Beugewinkelbereich vorzugsweise kleiner gleich sechs Grad (δ ≤ 6°) und in dem zweiten Beugewinkelbereich entsprechend größer als sechs Grad (δ > 6°). Bei einem beispielhaften Gelenk mit sechs Bahnpaaren und sechs Kugeln ist der Maulöffnungswinkel (δ) in dem zentralen Beugewinkelbereich vorzugsweise kleiner gleich zwölf Grad (δ ≤ 12°) und in dem zweiten Beugewinkelbereich entsprechend größer als zwölf Grad (δ > 12°). Die Zunahme des Maulöffnungswinkels (δ) innerhalb des zentralen Beugewinkelbereichs kann für ein 6-Kugel-Gelenk insbesondere mindestens vier Grad betragen (z.B. δ15 - δ0 > 4°).

Nach einer bevorzugten Ausgestaltung hat der Kugelkäfig eine sphärische Außenfläche zum Führen des Kugelkäfigs gegenüber einer inneren Fläche des Gelenkaußenteils und eine sphärische Innenfläche zum Führen des Kugelkäfigs gegenüber einer äußeren Fläche des Gelenkinnenteils. Zwischen einem Mittelpunkt der sphärischen Außenfläche und einem Mittelpunkt der sphärischen Innenfläche kann ein axialer Versatz (Offset) vorgesehen sein. Durch diese Maßnahme wird eine gute Käfigsteuerung bei Abwinklung des Gleichlaufgelenks erreicht. Es ist jedoch auch möglich, dass die Mittelpunkte der sphärischen Innenfläche und Außenfläche in einer Ebene liegen. Zwischen der äußeren sphärischen Außenfläche des Kugelkäfigs und der inneren sphärischen Fläche des Gelenkaußenteils und/oder zwischen der sphärischen Innenfläche des Kugelkäfigs und der sphärischen äußeren Fläche des Gelenkinnenteils ist vorzugsweise ein Radialspiel vorgesehen.

Die Mittelpunkte der Kugeln definieren beim Bewegen entlang der äußeren und inneren Kugelbahnen, in der Gelenkbeugeebene betrachtet, eine Mittelpunktslinie (A, A'). Dabei ist nach einer bevorzugten Ausgestaltung vorgesehen, dass die Mittelpunktslinie (A, A') über ihre Länge zumindest zwei Bahnabschnitte mit unterschiedlicher Krümmung aufweist. Die zumindest zwei Bahnabschnitte mit unterschiedlicher Krümmung können innerhalb des zentralen Abschnitts und/oder innerhalb des öffnungsseitigen Abschnitts und/oder innerhalb des anschlussseitigen Abschnitts der äußeren und inneren Kugelbahnen liegen. Es ist auch möglich, dass die Mittelpunktslinie (A, A') innerhalb von zumindest einem von dem anschlussseitigen Bahnabschnitt und dem öffnungsseitigen Bahnabschnitt des Gelenkaußenteils mindestens zwei Teilabschnitte mit unterschiedlicher Krümmung aufweist.

Vorzugsweise hat die Mittelpunktslinie (A, A') zumindest eine Krümmungsänderung innerhalb des ersten Beugewinkelbereichs. Mit Krümmungsänderung ist in diesem Zusammenhang jede Änderung der Steigung der Mittelpunktslinie im mathematischen Sinne zu verstehen, wie z. B. eine Änderung von einem Kreisbogen mit einem größeren Radius auf einen Kreisbogen mit einem kleineren Radius oder auf eine Gerade. Es versteht sich, dass die Mittelpunktslinie auch eine Kurve höherer Ordnung sein kann, wobei mit Krümmungsänderung hier ebenfalls eine Änderung der Steigung entlang der Kurve höherer Ordnung gemeint wäre.

Nach einer möglichen Ausführungsform ist die äußere Kugelbahn derart gestaltet, dass äußere Mittelpunktslinie (A) im zentralen Beugewinkelbereich durch einen äußeren Kreisbogen um einen äußeren Zentralabschnitts-Mittelpunkt (Mz) gebildet ist, wobei der äußere Zentralabschnitts-Mittelpunkt (Mz) relativ zum Gelenkmittelpunkt (M) einen axialen Abstand (Offset) in eine erste axiale Richtung aufweist, und dass die innere Kugelbahn derart gestaltet ist, dass die innere Mittelpunktslinie (A') im zentralen Beugewinkelbereich durch einen inneren Kreisbogen um einen inneren Zentralabschnitts-Mittelpunkt (Mz) gebildet ist, wobei der innere Zentralabschnitts-Mittelpunkt (Mz') relativ zum Gelenkmittelpunkt (M) einen axialen Abstand (Offset) in eine zweite axiale Richtung aufweist.

Im anschlussseitigen Bahnabschnitt des Gelenkaußenteils kann die äußere Kugelbahn insbesondere so gestaltet sein, dass die Mittelpunktslinie (A) radial außerhalb eines durch einen Referenzradius (Rr) definierten Kreisbogenabschnitts (Cr) verläuft. Der Referenzradius (Rr) kann so definiert werden, dass er sich von einem Referenzradius-Mittelpunkt (Mr) zum Mittelebenen-Schnittpunkt der Mittelpunktslinie (A) mit der Gelenkmittelebene (EM) erstreckt, wobei der Referenzradius-Mittelpunkt (Mr) relativ zur Gelenkmittelebene (EM) in Richtung Öffnungsseite des Gelenkaußenteils versetzt ist. Vorzugsweise ist der Referenzradius (Rr) kleiner als die Krümmung des anschlussseitigen Bahnabschnitts.

Der an den zentralen Abschnitt öffnungsseitig anschließende Bahnabschnitt des Gelenkinnenteils ist entsprechend dem anschlussseitigen Bahnabschnitt des Gelenkaußenteils gestaltet. Das heißt, dass der öffnungsseitige Bahnabschnitt des Gelenkinnenteils so gestaltet ist, dass die zugehörige Mittelpunktsbahn dieses Bahnabschnitts spiegelsymmetrisch zur Mittelpunktsbahn des anschlussseitigen Bahnabschnitts des Gelenkaußenteils in Bezug auf eine winkelhalbierende Ebene ist. Dies gilt für jedes der Bahnpaare.

Im Einbauzustand des Gleichlaufgelenks kann ein Faltenbalg zum Abdichten des Gelenkraums vorgesehen sein. Der Faltenbalg kann mit Vorspannung montiert sein.

Als Bahnwinkel β/2 wird im Rahmen der vorliegenden Offenbarung der Winkel verstanden, den ein Radius um den Gelenkmittelpunkt M an die Kugelmitte einer der drehmomentübertragenden Kugel mit der Gelenkmittelebene EM einschließt. Dabei beträgt der Bahnwinkel β/2 in jeder Winkelstellung des Gelenks üblicherweise die Hälfe des Gelenkbeugewinkels β, das heißt der Bahnwinkel β/2 von beispielsweise bis zu 15° entspricht einem Gelenkbeugewinkel von 30°.

Das Gleichlaufgelenk ist aufgrund der Führung des Kugelkäfigs gegenüber der sphärischen Innenfläche des Gelenkaußenteils bzw. der sphärischen Außenfläche des Gelenkinnenteil in Form eines Festgelenks gestaltet, das Verschiebebewegungen nur im Rahmen des Axialspiels zwischen Gelenkaußenteil und -innenteil zulässt.

Bevorzugte Ausführungsbeispiele werden nachstehend anhand der Zeichnungsfiguren erläutert. Hierin zeigt:
- Figur 1A): ein erfindungsgemäßes Gleichlaufgelenk in einer ersten Ausführungsform in gestreckter Lage im Längsschnitt;
- Figur 1B): das Gelenk aus Figur 1A) bei Abwinklung um einen Beugewinkel von 5°;
- Figur 1C): das Gelenk aus Figur 1A) bei Abwinklung um einen Beugewinkel von 10°;
- Figur 1D): das Gelenk aus Figur 1A) bei Abwinklung um einen Beugewinkel von 15°;
- Figur 1E): das Gelenkaußenteil des Gelenks aus Figur 1A) im Längsschnitt; und
- Figur 2: das Gelenkaußenteil eines erfindungsgemäßen Gleichlaufgelenks in einer abgewandelten zweiten Ausführungsform im Längsschnitt.

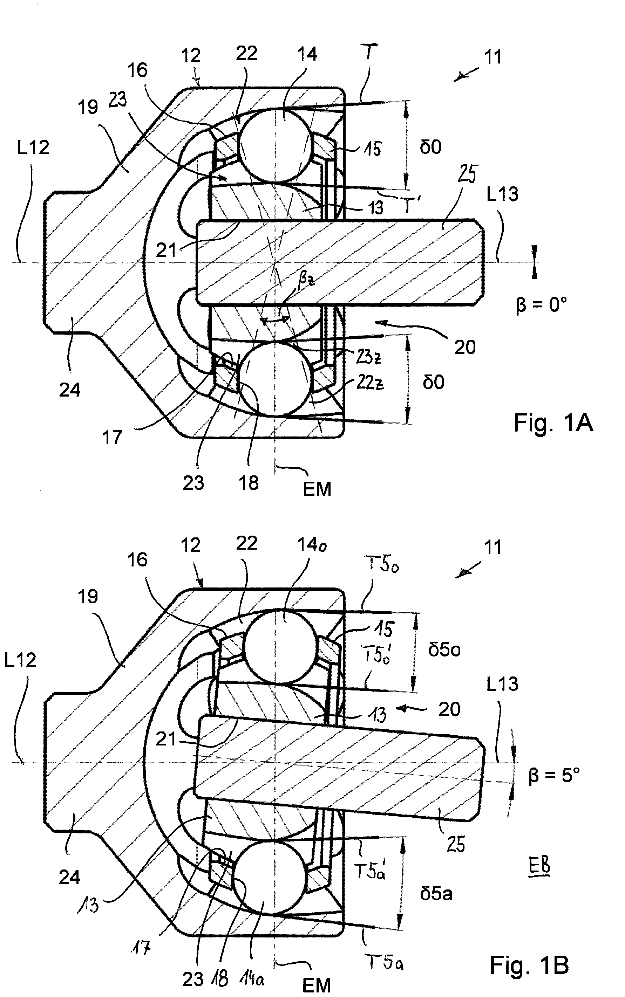

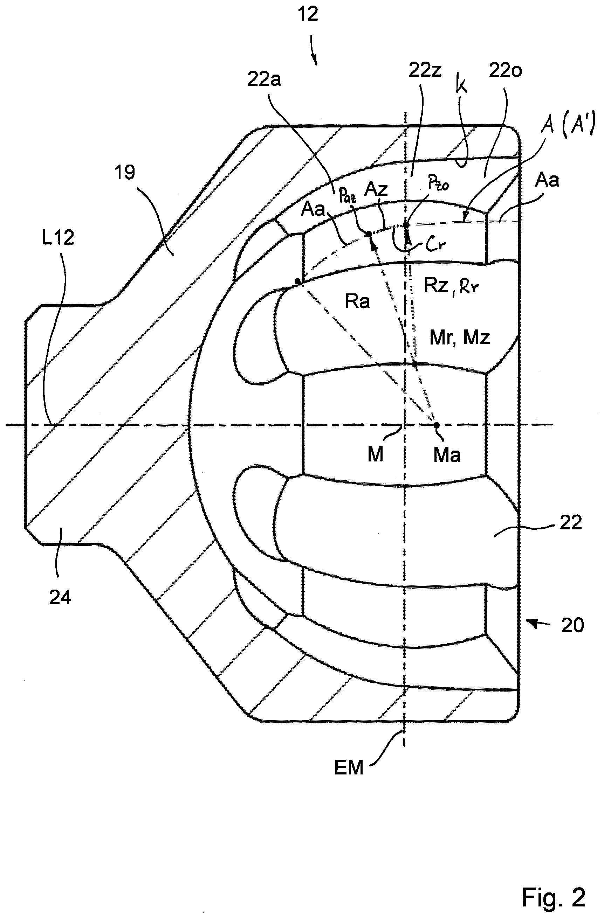

Die Figuren 1A) bis 1E) sowie Figur 2 werden nachstehend hinsichtlich ihrer Gemeinsamkeiten zunächst gemeinsam beschrieben. Es ist ein erfindungsgemäßes Gleichlaufdrehgelenk 11 gezeigt. Das Gleichlaufgelenk 11 umfasst ein Gelenkaußenteil 12, ein Gelenkinnenteil 13, drehmomentübertragende Kugeln 14, sowie einen Kugelkäfig 15. Der Kugelkäfig 15 hat eine sphärische Außenfläche 16, die im Gelenkaußenteil 12 geführt ist und eine sphärische Käfiginnenfläche 17, die auf dem Gelenkinnenteil 13 geführt ist. Die Kugeln 14 sind in umfangsverteilten Käfigfenstern 18 im Kugelkäfig 15 in der Gelenkmittelebene EM gehalten. Am Gelenkaußenteil 12 ist eine Längsachse L12 bezeichnet, am Gelenkinnenteil 13 eine Längsachse L13. Der Schnittpunkt der Längsachsen L12, L13 mit der Gelenkmittelebene EM bildet den Gelenkmittelpunkt M.

Zwischen der sphärischen Innenfläche 17 des Kugelkäfigs 15 und einer sphärischen Außenfläche des Gelenkinnenteils 13 sowie zwischen der sphärischen Außenfläche 16 des Kugelkäfigs 15 und einer sphärischen Innenfläche des Gelenkaußenteils 12 ist jeweils Spiel vorgesehen.

Das Gelenkaußenteil 12 weist einen Boden 19 auf, mit dem ein Anschlusszapfen 24 verbunden ist, sowie eine Öffnung 20. Das Gelenkinnenteil 13 hat eine Öffnung, in die der Zapfen einer Antriebswelle 25 zur Übertragung eines Drehmoments drehfest eingesteckt ist. Die Lage des Bodens 19 bezeichnet im Weiteren die axiale Richtung "zur Anschlussseite", die Lage der Öffnung 20 bezeichnet im Weiteren die axiale Richtung "zur Öffnungsseite". Diese Begriffe werden auch in Bezug auf das Gelenkinnenteil 13 verwendet, wobei der tatsächliche Anschluss der Welle 25 an das Gelenkinnenteil 13 unberücksichtigt bleibt. Es versteht sich, dass das Gelenkaußenteil anstelle des Bodens auch zur Anschlussseite hin offen gestaltet sein kann, wie es beispielsweise bei einem Scheibengelenk der Fall ist.

Im Gelenkaußenteil 12 sind äußere Kugelbahnen 22 und im Gelenkinnenteil 13 sind innere Kugelbahnen 23 des Gleichlaufgelenks 11 gebildet. Jeweils eine äußere Kugelbahn 22 und eine innere Kugelbahn 23 liegen einander gegenüber und bilden gemeinsam ein Bahnpaar miteinander, in dem jeweils eine drehmomentübertragende Kugel 14 geführt ist. Die einander gegenüberliegenden äußeren und inneren Kugelbahnen 22, 23 können in Radialebenen um die jeweilige Längsachse L12, L13 liegen. Die Radialebenen haben jeweils den gleichen Winkelabstand voneinander. Es ist jedoch auch denkbar, dass jeweils zwei in Umfangsrichtung benachbarte Bahnpaare in zueinander parallelen Ebenen verlaufen, welche parallel zur Längsachse L12, L13 liegen. Diese Ausgestaltung wird auch als "Twin-Ball"-Gelenk bezeichnet. Bei Abwinklung des Gelenks, das heißt bei Winkelbewegungen des Gelenkinnenteils 13 relativ zum Gelenkaußenteil 12, werden die Kugeln 14 aus der Gelenkmittelebene EM heraus zumindest etwa in die winkelhalbierende Ebene zwischen der Längsachse L12 des Gelenkaußenteils 12 und der Längsachse L13 des Gelenkinnenteils 13 geführt. Mit zumindest etwa ist gemeint, dass die durch die Kugelmittelpunkte der Kugeln 14 aufgespannte Ebene innerhalb eines Winkelbereichs von ± 10 % um die winkelhalbierende Ebene liegt, und dieser insbesondere entsprechen kann.

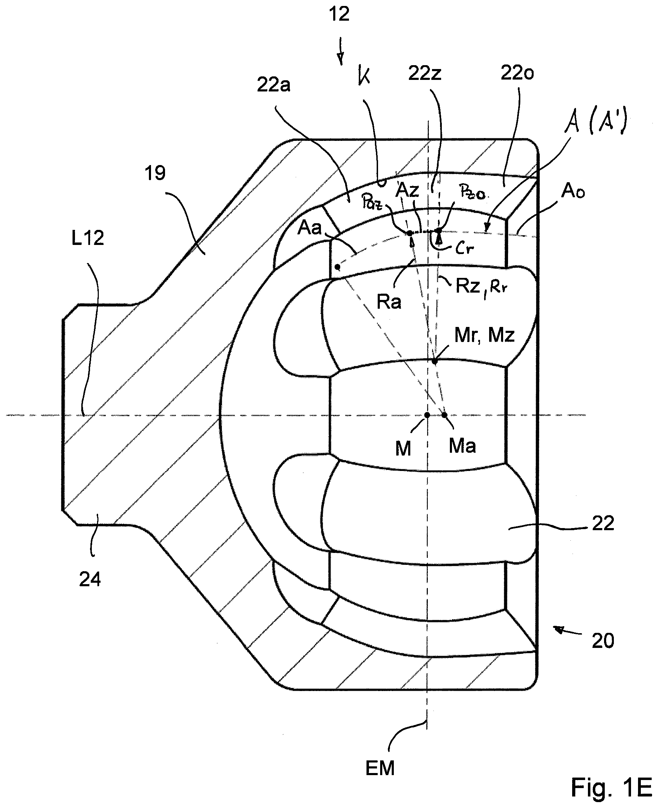

Die Form der äußeren Kugelbahnen 22, die der Form der inneren Kugelbahnen zumindest weitgehend entspricht, ist insbesondere in Figur 1E erkennbar. Die Kugeln 14 haben Kontakt mit den äußeren Kugelbahnen 22 im Gelenkaußenteil 12 und inneren Kugelbahnen 23 im Gelenkinnenteil 13. Dabei bilden die Kugeln 14 im Kontaktbereich mit den äußeren Kugelbahnen 22 im Längsschnitt eine äußere Kontaktlinie K und im Kontaktbereich mit den inneren Kugelbahnen 23 eine innere Kontaktlinie K'. Die Kugeln 14 sind mit Kontakt im Bahngrund der Kugelbahnen 22, 23 dargestellt, der nicht notwendig gegeben sein muss. So können die äußere und innere Kontaktlinie K, K', wie gezeigt, im Bahngrund liegen, das heißt in einer Radialebene, welche die Längsachsen L12, L13 beinhaltet, oder in zu den Längsachsen parallelen Ebenen. Beim Bewegen entlang der äußeren und inneren Kugelbahnen 22, 23 definieren die Mittelpunkte der Kugeln 14 jeweils eine Mittelpunktslinie A, A'. Die Mittelpunktslinien A, A' verlaufen parallel zur jeweiligen Kontaktlinie K, K'. Zur Beschreibung der Kugelbahnen 22, 23 kann entweder auf die Kontaktlinien K, K' im Bahngrund oder auf die Mittellinien A, A' Bezug genommen werden, die durch die Summe der Kugelmittelpunkte bei Winkelbewegungen des Gelenks definiert wird. Dabei bezeichnet die Kugelmittellinie A die Linie der Kugelmittelpunkte der Kugeln 14A entlang der äußeren Kugelbahnen 22 im Gelenkaußenteil 12, und A' die Kugelmittellinie der zugehörigen inneren Kugelbahnen 23 im Gelenkinnenteil 13.

Im Folgenden wird näher auf die Besonderheiten des erfindungsgemäßen Gleichlaufgelenks, insbesondere auf die Ausgestaltung der Kugelbahnen 22, 23 eingegangen. Es gelten vorliegend im Zusammenhang mit dem erfindungsgemäßen Gleichlaufgelenk bzw. der Ausgestaltung der Kugelbahnen die folgenden Definitionen:
Der Tangentenwinkel α definiert den Winkel, der zwischen einer Tangente T an eine Mittelpunktslinie A, A' bzw. eine Kontaktlinie K, K' des Gelenkaußenteils 12 bzw. Gelenkinnenteils 13 in einem beliebigen Bahnpunkt und der Längsachse L12, L13 des Gelenkaußenteils bzw. Gelenkinnenteils eingeschlossen ist.

Der Gelenkbeugewinkel β definiert den Winkel, der zwischen der Längsachse L12 des Gelenkaußenteils 12 und der Längsachse L13 des Gelenkinnenteils 13 eingeschlossen wird. Der Gelenkbeugewinkel β beträgt bei gestrecktem Gelenk Null.

Der Bahnwinkel β/2 definiert den Winkel, den ein Radius um den Gelenkmittelpunkt M an die Kugelmitte mit der Gelenkmittelebene EM einschließt. Dabei beträgt der Bahnwinkel β/2 in jeder Winkelstellung des Gelenks stets die Hälfe des Gelenkbeugewinkels β.

Der Maulöffnungswinkel δ definiert den Winkel, der von Tangenten T, T' an die Kugeln 14 in den Kontaktpunkten mit den ersten Kugelbahnen 22 bzw. den zweiten Kugelbahnen 23 eingeschlossen wird. Dabei ist die Systematik in der vorliegenden Offenbarung so, dass der Maulöffnungswinkel, der über den technisch möglichen Beugewinkelbereich verschiedene Größen annehmen kann, allgemein mit δ bezeichnet ist; ausgewählte konkrete Beugewinkel können mit dem jeweiligen Beugewinkel und einer Angabe über die Position der Kugel ergänzt werden (beispielsweise δ0 für den Maulöffnungswinkel bei Beugewinkel von null oder δ15o für den Maulöffnungswinkel an der öffnungsseitigen Kugel bei einem Beugewinkel von 15°).

Die Mittelpunktsebene EM ist definiert durch die Kugelmittelpunkte der drehmomentübertragenden Kugeln 14 bei gestrecktem Gelenk.

Ein Referenzradius Rr für die Kugelmittelpunktslinie A des Gelenkaußenteils 12, beziehungsweise für die Kugelmittelpunktslinie A' des Gelenkinnenteils 13, ist definiert um den Referenzradius-Mittelpunkt Mr herum durch einen Mittelebenen-Schnittpunkt der jeweiligen Mittelpunktslinie A, A' mit der Gelenkmittelebene EM. Dabei ist der Referenzradius-Mittelpunkt Mr um einen axialen Versatz von der Gelenkmittelebene EM versetzt, der dem Produkt aus dem Rollkreisradius mit dem Sinus des Bahnwinkels β/2 entspricht.

Der Referenzradius Rr für die Mittelpunktslinie A, A' definiert einen Referenzkreisbogen Cr.

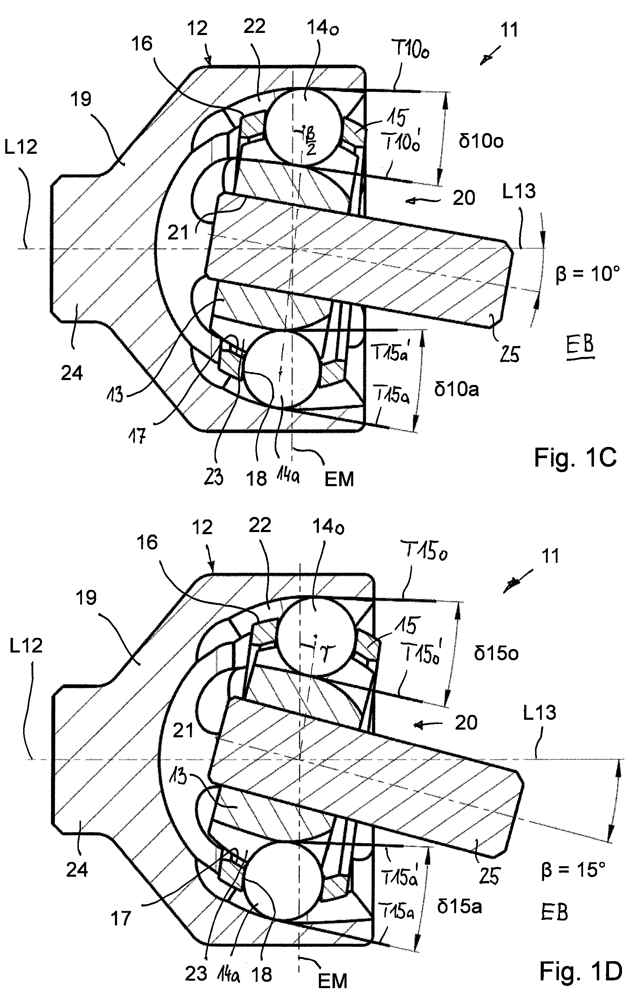

Die Figuren 1A) bis 1D) zeigen das Gleichlaufgelenk in verschiedenen Winkelpositionen, Figur 1A) bei koaxial ausgerichtetem Gelenkaußenteil 12 und Gelenkinnenteil 13, das heißt Beugewinkel β = 0°, Figur 1B) bei einem Beugewinkel von 5°, Figur 1C) bei einem Beugewinkel von 10° und Figur 1D) bei einem Beugewinkel von 15°. In Figur 1E) ist das Gelenkaußenteil 12 mit seiner Mittelpunktslinie A und Kontaktlinie K gezeigt, welche äquidistant zueinander verlaufen. Das Gleichlaufgelenk 11 umfasst vorliegend eine Anzahl von sechs Kugeln 14 bzw. sechs Bahnpaaren 22, 23, wobei es sich versteht, dass eine andere Zahl denkbar ist. Die Mittelpunktslinie A des Gelenkaußenteils 12 weist, ausgehend von der Öffnungsseite in Richtung Anschlussseite in der angegebenen Reihenfolge einen öffnungsseitigen Abschnitt Ao, der sich von der Öffnungsseite des Gelenkaußenteils 12 in Richtung Anschlussseite erstreckt, einen an den öffnungsseitigen Abschnitt Ao stetig anschließenden zentralen Abschnitt Az und einen an den zentralen Abschnitt Az stetig anschließenden anschlussseitigen Abschnitt Aa.

Entsprechend weist die Mittelpunktslinie A' des Gelenkinnenteils 13, das nicht gesondert dargestellt ist, ausgehend von der Öffnungsseite in Richtung Anschlussseite in der angegebenen Reihenfolge einen öffnungsseitigen Abschnitt Ao', einen daran stetig anschließenden zentralen Abschnitt Az' und einen daran stetig anschließenden anschlussseitigen Abschnitt Aa'.

Der zentrale Bahnabschnitt 22z der äußeren Kugelbahn 22 und der zentrale Bahnabschnitt 23z der inneren Kugelbahn 23 liegen innerhalb eines Gelenkbeugewinkelbereichs β_{z} von ± 15° um die Gelenkmittelebene EM und beinhalten diese. Es ist in Figur 1A) erkennbar, dass eine an die äußere Kontaktlinie K beim Beugewinkel β von null Grad angelegte äußere zentrale Kontaktlinientangente T und eine an die innere Kontaktlinie K' angelegte innere zentrale Kontaktlinientangente T' einen Maulöffnungswinkel δo miteinander einschließen, der ungleich null Grad ist. Vorzugsweise beträgt der Maulöffnungswinkel δo bei gestrecktem Gelenk mindestens 1° und/oder maximal 8°. Vorliegend sind die Kugelbahnen so gestaltet, dass der Maulöffnungswinkel δo etwa 6° bei gestrecktem Gelenk beträgt. Durch den vergleichsweise kleinen Maulöffnungswinkel δo bei gestrecktem Gelenk wirken nur geringe Axialkräfte von den Kugelbahnen 22, 23 auf die Kugeln 14, was sich reibungsmindernd für das Gelenk auswirkt.

Des Weiteren ist in den Figuren 1B) bis 1E) erkennbar, welche das Gleichlaufgelenk 11 bei Beugewinkeln β von 5°, 10° und 15° zeigen, dass die äußeren und inneren Kugelbahnen 22, 23 so gestaltet sind, dass sich in der Gelenkbeugeebene sowohl an der ausgehend von der Gelenkmittelebene EM in Richtung Öffnungsseite wandernden Kugel 14o (obere Bildhälfte), als auch an der ausgehend von der Gelenkmittelebene EM in Richtung Anschlussseite wandernden Kugel 14a (untere Bildhälfte) Maulöffnungswinkel δ erzeugt werden, die sich in dieselbe axiale Richtung öffnen. Das heißt, dass die durch die Maulöffnungswinkel δ von den Kugelbahnen 22, 23 auf die Kugeln 14 wirkenden resultierenden Axialkräfte somit in dieselbe axiale Richtung wirken.

Die Maulöffnungswinkel δ werden jeweils von einer an die äußere Kontaktlinie K an die jeweilige Kugel 14 angelegte äußere Kontaktlinientangente T und einer an die innere Kontaktlinie K' der besagten Kugel 14 angelegten inneren Kontaktlinientangente T' eingeschlossen. Ein zentraler Beugewinkelbereich ist vorliegend so definiert, dass er Beugewinkel von bis zu plus minus fünfzehn Grad (β = 0°± 15°) um die Gelenkmittelebene EM umfasst, das heißt einen Beugewinkelbereich βz von -15° bis +15° umfasst (-15°< βz < 15°). Ein daran anschließender zweiter Beugewinkelbereich umfasst Beugewinkel β, die betragsmäßig größer sind als fünfzehn Grad, das heißt Beugewinkel β, die größer sind als 15° und solche, die kleiner sind als -15° (β < -15° oder β > 15°).

Für einen Beugewinkel ß von 5° an der in der Gelenkbeugeebene in Richtung Öffnungsseite wandernden Kugel 14o zwischen der äußeren Tangente T5o und der inneren Tangente T5o' ist ein erster Maulöffnungswinkel δ5o gebildet, der bei der vorliegenden Ausführungsform insbesondere etwa 2° beträgt, während an der in der Gelenkbeugeebene in Richtung Anschlussseite wandernden Kugel 14a zwischen der äußeren Tangente T5a und der inneren Tangente T5a' ein zweiter Maulöffnungswinkel δ5a anliegt, der insbesondere etwa 8° beträgt.

Bei einem größeren Beugewinkel ß von 10° sind die Maulöffnungswinkel δ10o, δ10a an der öffnungsseitigen und anschlussseitigen Kugel 14o, 14a bei der vorliegenden Ausführungsform jeweils größer als beim Beugewinkel von 5°. Dabei beträgt der Maulöffnungswinkel δ10o an der öffnungsseitigen Kugel 14o insbesondere etwa 6,5°, während der Maulöffnungswinkel δ10a an der anschlussseitigen Kugel 14a insbesondere etwa 10° beträgt.

Bei einem nochmals größeren Beugewinkel ß von 15° sind die Maulöffnungswinkel δ15o, δ15a an der öffnungsseitigen und anschlussseitigen Kugel 14o, 14a jeweils größer als beim Beugewinkel von 10°. Dabei beträgt der Maulöffnungswinkel δ15o an der öffnungsseitigen Kugel 14o insbesondere etwa 11°, während der Maulöffnungswinkel δ15a an der anschlussseitigen Kugel 14a insbesondere etwa 10,5° beträgt.

Es versteht sich, dass die genannten Maulöffnungswinkel δ zu den genannten Beugewinkeln ß beispielhaft sind und von der gewählten Bahnform abhängen. Insgesamt ist vorgesehen, dass der Maulöffnungswinkel δ zumindest innerhalb eines Teilbereichs des zentralen Beugewinkelbereichs βz um mindestens zwei Grad zunimmt (δ15 - δ0 > 2°), und der Maulöffnungswinkel δ für alle Beugewinkel β innerhalb des zentralen Beugewinkelbereichs βz weniger als zwölf Grad beträgt (δ < 12°).

Die genannten Maulöffnungswinkel δ sind, verglichen mit bekannten Festgelenken, vergleichsweise niedrig, was zu geringeren Reibungsverlusten zwischen den sich zueinander bewegenden Bauteilen führt. Die Kugelbahnen sind vorzugsweise so gestaltet, dass die Maulöffnungswinkel δ der öffnungsseitig wandernden Kugeln 14a und der anschlussseitig wandernden Kugeln 14a zumindest annähernd gleich groß sind. Eine gewisse größenmäßige Abweichung der öffnungs- und anschlussseitigen Öffnungswinkel voneinander ist jedoch zulässig, beispielsweise im Bereich von bis zu ± 10 %.

Bei weiterer Abwinkelung außerhalb des zentralen Beugewinkelbereichs, das heißt Beugewinkeln von betragsmäßig mehr als 15°, nehmen die Maulöffnungswinkel δ weiter zu. Bei einer Abwinklung von 30° kann der Maulöffnungswinkel an der öffnungsseitigen Kugel 14o beispielsweise zwischen 30° und 40° liegen, während der Maulöffnungswinkel an der anschlussseitigen Kugel 14a beispielsweise zwischen 15° und 30° betragen kann, ohne hierauf eingeschränkt zu sein. Es ist theoretisch denkbar, dass die Maulöffnungswinkel δ an die öffnungsseitigen und anschlussseitigen Kugeln 14 bei größeren Gelenkbeugewinkeln β, die größer sind als 40°, auch in entgegengesetzte axiale Richtungen weisen. In jedem Fall sind die Kugelbahnen aber so gestaltet, dass sich die Maulöffnungswinkel δ an die öffnungsseitigen und anschlussseitigen Kugeln 14, bei Gelenkbeugung zumindest bis zu einem Beugewinkel β von mindestens 30° in dieselbe axiale Richtung öffnen. Durch diese Maßnahme wird eine gute Käfigsteuerung, insbesondere auch bei großen Beugewinkeln β erreicht.

In Figur 1E) sind weitere Details der Bahnform der äußeren Kugelbahnen 22 des Gelenkaußenteils 12 gezeigt. Es ist der Referenzradius Rr eingezeichnet, dessen Radiusmittelpunkt Mr gegenüber dem Gelenkmittelpunkt M axial und radial versetzt ist und dessen Ende durch den Schnittpunkt der Mittelpunktslinie A mit der Gelenkmittelebene EM definiert ist. Die einzelnen Bahnabschnitte 22o, 22z, 22a bzw. die einzelnen Mittelpunktslinienabschnitte Ao, Az, Aa sind durch ihre unterschiedlichen Krümmungen bzw. Radien gekennzeichnet.

Die Kugelbahnen 22, 23 des vorliegenden Gleichlaufgelenks haben insgesamt zwei Krümmungsänderungen, ohne hierauf eingeschränkt zu sein. Mit Krümmungsänderung ist in diesem Zusammenhang jede Änderung der Steigung der Mittelpunktslinie im mathematischen Sinne zu verstehen.

Ein erster Krümmungsänderungspunkt Pzo ist zwischen dem öffnungsseitigen Bahnabschnitt 22o und dem zentralen Bahnabschnitt 22z gebildet. Der Krümmungsänderungspunkt Pzo ist gegenüber der Gelenkmittelebene EM zur Öffnungsseite hin versetzt. Eine durch den Gelenkmittelpunkt M und den Krümmungsänderungspunkt Pzo verlaufende Linie schließt mit der Gelenkmittelebene EM einen Winkel ein, der beispielsweise kleiner 5°, insbesondere kleiner 4° sein kann. Der öffnungsseitige Bahnabschnitt 22o ist vorliegend durch eine Gerade gebildet, ohne hierauf eingeschränkt zu sein. Die Gerade verläuft etwa parallel zur Längsachse L12 beziehungsweise schließt mit dieser einen kleinen Winkel ein; ebenso denkbar wäre eine Ausgestaltung des öffnungsseitigen Bahnabschnitts durch einen Kreisbogen oder eine Kurve höherer Ordnung.

Der daran anschließende zentrale Bahnabschnitt 22z ist durch einen Kreisbogen mit Radius Rz um den Kreismittelpunkt Mz gebildet, ohne hierauf eingeschränkt zu sein. Der Kreismittelpunkt Mz ist gegenüber dem Gelenkmittelpunkt M axial in Richtung Öffnungsseite und radial in Richtung Kugelbahn versetzt. Der radiale Versatz des Kreismittelpunkts Mz zum Mittelpunkt M ist größer als der axiale Versatz. Der Kreisbogen um den Punk Mz definiert den zentralen Mittelpunktslinienabschnitt Az zwischen den beiden Krümmungsänderungspunkten Pzo und Paz. Der Krümmungsänderungspunkt Paz ist gegenüber der Gelenkmittelebene EM zur Anschlussseite hin versetzt. Eine durch den Gelenkmittelpunkt M und den Krümmungsänderungspunkt Paz verlaufende Linie schließt mit der Gelenkmittelebene EM einen Winkel ein, der beispielsweise kleiner 10°, insbesondere kleiner 8° sein kann.

Der an den zentralen Bahnabschnitt 22z anschließende anschlussseitige Bahnabschnitt 22a ist durch einen Kreisbogen mit Radius Ra um den Kreismittelpunkt Ma gebildet. Es ist erkennbar, dass der Radius Ra des anschlussseitigen Bahnabschnitts 22a größer ist als der Radius Rz des zentralen Bahnabschnitts 22z. Der Kreismittelpunkt Ma des anschlussseitigen Bahnabschnitts 22a liegt vorliegend auf der Längsachse L12 und ist gegenüber dem Gelenkmittelpunkt M axial in Richtung Öffnungsseite versetzt, wobei auch andere Ausgestaltungen mit radialem Versatz des Kreismittelpunkts Ma denkbar sind.

Der zentrale Radius Rz definiert einen Referenzradius Rr mit einem Referenzkreisbogen um den Mittelpunkt Mz (Mr). Dabei ergibt sich vorliegend geometrisch, dass die Mittelpunktslinie A im öffnungsseitigen Bahnabschnitt Ao radial außerhalb des Referenzkreisbogens des Referenzradius Rr liegt. Dies wird, wie oben beschrieben für die Kugelbahn des vorliegenden Gelenkaußenteils 12 durch eine gerade Kugelbahn in Richtung Öffnungsseite erreicht. Im zentralen Bahnabschnitt 22z, der sich zwischen den Punkten Pzo und Paz erstreckt, fällt der Mittelpunktslinienabschnitt Az mit dem Referenzradius Rr zusammen. Der anschlussseitige Bahnabschnitt 22a, welcher sich ab dem Übergangspunkt Paz in Richtung Anschlussseite erstreckt, liegt mit seinem entsprechenden Mittelpunktslinienabschnitt Az wieder radial außerhalb des Referenzkreisbogens des Referenzradius Rr. Es versteht sich jedoch, dass auch hier andere Bahnformen denkbar sind, beispielsweise, dass die Mittelpunktslinie A in Richtung Anschlussseite radial innerhalb des oder auf dem durch den Referenzradius RR definierten Referenzkreisbogen verläuft.

Das Gelenkinnenteil 13 (nicht gesondert dargestellt) des erfindungsgemäßen Gleichlaufgelenks 11 hat eine Kugelmittelpunktslinie A', die komplementär zur Kugelmittelpunktslinie A des Gelenkaußenteils 12 gestaltet ist. Das heißt, die Kugelmittelpunktslinie A' des Gelenkinnenteils 13 ist spiegelsymmetrisch zur Kugelmittelpunktslinie A des Gelenkaußenteils 12 in Bezug auf die Gelenkmittelebene EM, beziehungsweise in Bezug auf die winkelhalbierende Ebene zwischen der Längsachse L12 des Gelenkaußenteils 12 und der Längsachse L13 des Gelenkinnenteils 13. Zur Vermeidung von Wiederholungen wird insofern hinsichtlich des Bahnverlaufs der Kugelmittelpunktslinien A' des Gelenkinnenteils 13 auf die im Zusammenhang mit der Beschreibung der Kugelbahnen des Gelenkaußenteils 12 gemachten Ausführungen verwiesen.

Figur 2 zeigt ein Gelenkaußenteil 12 eines erfindungsgemäßen Gleichlaufgelenks in einer abgewandelten zweiten Ausführungsform. Diese entspricht weitestgehend der Ausführungsform gemäß Figur 1, auf deren Beschreibung insofern Bezug genommen sind. Dabei sind gleiche beziehungsweise abgewandelte Einzelheiten mit denselben Bezugszeichen versehen, wie in Figur 1.

Ein Unterschied zur obigen Ausführungsform besteht darin, dass der Übergangpunkt Pzo vorliegend in der Gelenkmittelebene EM liegt. Hierdurch ergibt sich ein öffnungsseitiger Bahnabschnitt 22o, der sich leicht öffnet, das heißt der gerade Mittelpunktslinienabschnitt Aa schließt mit der Längsachse L12 einen kleinen Winkel, beispielsweise kleiner 5°, der sich in Richtung Öffnungsseite öffnet. Der Übergangpunkt Paz ist von der Gelenkmittelebene EM weiter weg versetzt als bei der obigen Ausführungsform. Dabei ist bei der vorliegenden Ausführungsform vorgesehen, dass eine durch den Gelenkmittelpunkt M und den Krümmungsänderungspunkt Paz verlaufende Linie mit der Gelenkmittelebene EM einen Winkel einschließt, der beispielsweise größer 10° und kleiner 15° ist, ohne hierauf eingeschränkt zu sein. Das Gelenkinnenteil, das nicht gesondert dargestellt ist, ist zum Gelenkaußenteil 12 komplementär gestaltet. Die übrigen Einzelheiten entsprechen sinngemäß der obigen Ausführungsform.

Für beide gezeigte Ausführungsformen gilt, dass bei einem Beugewinkel β von null Grad (β = 0°) der Maulöffnungswinkel δ größer null Grad ist (δ > 0°), ferner dass der Maulöffnungswinkel δ zumindest innerhalb des Beugewinkelbereichs βz von ± 15° um mindestens zwei Grad zunimmt (δ15' - δ0 > 2°), und dass der Maulöffnungswinkel δ für alle Beugewinkel β innerhalb des zentralen Beugewinkelbereichs weniger als zwölf Grad beträgt (δ < 12°). Auf diese Weise ist auch bei kleinen Beugewinkeln β von bis zu fünfzehn Grad um die Gelenkmittelebene EM eine zuverlässige Käfigsteuerung des Kugelkäfigs 15 gewährleistet. Aufgrund der verhältnismäßig geringen Maulöffnungswinkel δ treten nur geringe Reaktionskräfte zwischen den in Kontakt stehenden Gelenkteilen auf, so dass Reibungsverluste entsprechend gering sind.

### Bezugszeichenliste

- 11: Gleichlaufgelenk
- 12: Gelenkaußenteil
- 13: Gelenkinnenteil
- 14: Kugel
- 15: Kugelkäfig
- 16: äußere Kugelfläche
- 17: innere Kugelfläche
- 18: Fenster
- 19: Anschlussseite
- 20: Öffnungsseite
- 22: äußere Kugelbahn
- 22a,z,o: Bahnabschnitte
- 23: innere Kugelbahn
- 24: Zapfen
- 25: Antriebswelle
- A, A': Mittelpunktslinie
- Aa, Az, Ao: Mittelpunktslinien
- Cr: Referenzkreisbogen
- EB: Gelenkbeugeebene
- EM: Gelenkmittelebene
- K: Kontaktlinie
- L: Längsachse
- Paz: Übergangspunkt
- Pzo: Krümmungsänderungspunkt
- R, Ra, Rz: Radius
- Rr: Referenzradius
- M: Gelenkmittelpunkt
- Ma, Mz, Mo: Mittelpunkte
- T, T': Tangente
- β: Gelenkbeugewinkel
- δ: Maulöffnungswinkel

## Patentansprüche

1. Gleichlaufgelenk, umfassend:
ein Gelenkaußenteil (12) mit einer Längsachse (L12) und äußeren Kugelbahnen (22), wobei das Gelenkaußenteil (12) eine Anschlussseite (19) und eine Öffnungsseite (20) hat,
ein Gelenkinnenteil (13) mit einer Längsachse (L13) und inneren Kugelbahnen (23),
wobei jeweils eine äußere Kugelbahn (22) und eine innere Kugelbahn (23) ein Bahnpaar (22, 23) miteinander bilden,
jeweils eine drehmomentübertragende Kugel (14) in jedem Bahnpaar (22, 23), einen Kugelkäfig (15), der zwischen dem Gelenkaußenteil (12) und dem Gelenkinnenteil (13) angeordnet ist und umfangsverteilte Käfigfenster (18) aufweist, die jeweils zumindest eine der drehmomentübertragenden Kugeln (14) aufnehmen,
wobei die Kugeln (14) vom Kugelkäfig (15) bei koaxial ausgerichteten Längsachsen (L12, L13) des Gelenkinnenteils (13) und des Gelenkaußenteils (12) eine Gelenkmittelebene (EM) definieren, wobei die beiden Längsachsen (L12, L13) bei von null Grad (0°) abweichenden Beugewinkeln (β), die zwischen den beiden Längsachsen (L12, L13) eingeschlossen werden, eine Gelenkbeugeebene (EB) aufspannen;
wobei, in der Gelenkbeugeebene (EB) betrachtet, in jeder Winkelstellung des Gleichlaufgelenks (11) ein Maulöffnungswinkel (δ) gebildet ist zwischen einer äußeren Tangente (T), die in einem äußeren Kontaktpunkt zwischen äußerer Kugelbahn (22) und Kugel (14) an die äußere Kugelbahn (22) angelegt ist, und einer inneren Tangente (T'), die in einem inneren Kontaktpunkt zwischen innerer Kugelbahn (23) und Kugel (14) an die innere Kugelbahn (23) angelegt ist, wobei die Mittelpunkte der Kugeln (14) beim Bewegen entlang der äußeren und inneren Kugelbahnen (22, 23) jeweils eine Mittelpunktslinie (A, A') definieren,
**dadurch gekennzeichnet, dass** es einen ersten Beugewinkelbereich mit Beugewinkeln (β) umfasst, die betragsmäßig kleiner als fünfzehn Grad sind (-15° < β < 15°), und einen zweiten Beugewinkelbereich mit Beugewinkeln (β) umfasst, die betragsmäßig größer gleich 15° sind (β ≤ -15° v β ≥ 15°), wobei zumindest ein Maulöffnungswinkel (δ) innerhalb des zweiten Beugewinkelbereichs größer ist als ein größter Maulöffnungswinkel des ersten Beugewinkelbereichs,
wobei alle Kugelbahnen (22, 23) derart gestaltet sind, dass sich innerhalb des zweiten Beugewinkelbereichs die Maulöffnungswinkel (δ) aller Kugeln (14), jeweils in der Gelenkbeugeebene (EB) betrachtet, in dieselbe axiale Richtung öffnen,
wobei zumindest eines der Bahnpaare (22, 23) bei einem Beugewinkel von null Grad (β = 0°) einen Maulöffnungswinkel (δ) größer null Grad aufweist (δ > 0°), wobei bei dem zumindest einen Bahnpaar (22, 23) der Maulöffnungswinkel (δ) für alle Beugewinkel (β) innerhalb des ersten Beugewinkelbereichs kleiner als zwölf Grad ist (δ < 12°), und
wobei der Maulöffnungswinkel (δ) zumindest innerhalb eines Teilbereichs des ersten Beugewinkelbereichs um mindestens zwei Grad zunimmt.

2. Gleichlaufgelenk nach Anspruch 1, **dadurch gekennzeichnet, dass** der Maulöffnungswinkel (δ) beim Beugewinkel von null Grad (β = 0°) größer als ein Grad (δ > 1°) und kleiner als acht Grad (δ < 8°) ist.

3. Gleichlaufgelenk nach einem der Ansprüche 1 oder 2, **dadurch gekennzeichnet, dass** der Maulöffnungswinkel (δ) innerhalb des ersten Beugewinkelbereichs um mindestens vier Grad zunimmt.

4. Gleichlaufgelenk nach einem der Ansprüche 1 bis 3,
**dadurch gekennzeichnet,**
**dass** acht Bahnpaare und acht Kugeln vorgesehen sind, wobei der Maulöffnungswinkel (δ) in dem ersten Beugewinkelbereich maximal sechs Grad beträgt (δ ≤ 6°), oder,
**dass** sechs Bahnpaare (22, 23) und sechs Kugeln (14) vorgesehen sind, wobei der Maulöffnungswinkel (δ) in dem ersten Beugewinkelbereich maximal zwölf Grad ist (δ ≤ 12°) und der Maulöffnungswinkel (δ) innerhalb des ersten Beugewinkelbereichs um mindestens vier Grad zunimmt.

5. Gleichlaufgelenk nach einem der Ansprüche 1 bis 4,
**dadurch gekennzeichnet,**
**dass** das zumindest eine Bahnpaar (22, 23) derart gestaltet ist, dass bei jedem Beugewinkel (β) innerhalb des ersten Beugewinkelbereichs gilt, dass ein öffnungsseitiger Maulöffnungswinkel (δo) einer sich in der Gelenkbeugeebene (EB) zur Öffnungsseite des Gelenkaußenteils (12) bewegenden Kugel (14) und ein anschlussseitiger Maulöffnungswinkel (δa) einer sich bei demselben Beugewinkel (β) in der Gelenkbeugeebene (EB) zur Anschlussseite des Gelenkaußenteils (12) bewegenden Kugel (14) sich in dieselbe axiale Richtung öffnen.

6. Gleichlaufgelenk nach einem der Ansprüche 1 bis 5,
**dadurch gekennzeichnet,**
**dass** der Kugelkäfig (15) eine sphärische Außenfläche (16) zum Führen des Kugelkäfigs (15) gegenüber einer inneren Fläche des Gelenkaußenteils (12) und eine sphärische Innenfläche (17) zum Führen des Kugelkäfigs (15) gegenüber einer äußeren Fläche des Gelenkinnenteils (13) aufweist,
wobei zwischen einem Mittelpunkt der sphärischen Außenfläche (16) und einem Mittelpunkt der sphärischen Innenfläche (17) ein axialer Versatz (Offset) vorgesehen ist.

7. Gleichlaufgelenk nach einem der Ansprüche 1 bis 6,
**dadurch gekennzeichnet,**
**dass** die Mittelpunkte der Kugeln (14) beim Bewegen entlang der äußeren und inneren Kugelbahnen (22, 23) jeweils eine Mittelpunktslinie (A, A') definieren, wobei die Mittelpunktslinien (A, A') über ihre Länge jeweils zumindest zwei Bahnabschnitte (22a, 22o) mit unterschiedlicher Krümmung aufweisen.

8. Gleichlaufgelenk nach einem der Ansprüche 1 bis 7,
**dadurch gekennzeichnet,**
**dass** die Mittelpunktslinien (A, A') jeweils mindestens einen Krümmungsänderungspunkt (Pzo, Paz) innerhalb des ersten Beugewinkelbereichs aufweisen.

9. Gleichlaufgelenk nach einem der Ansprüche 1 bis 8,
**dadurch gekennzeichnet,**
**dass** alle Kugelbahnen (22, 23) derart gestaltet sind, dass sich innerhalb des zweiten Beugewinkelbereichs die Maulöffnungswinkel (δ) aller Kugeln (14), jeweils in der Gelenkbeugeebene (EB) betrachtet, in dieselbe axiale Richtung öffnen.

10. Gleichlaufgelenk nach einem der Ansprüche 1 bis 9,
**dadurch gekennzeichnet,**
**dass** die äußere Kugelbahn (22) derart gestaltet ist, dass die äußere Mittelpunktslinie (A) im zentralen Beugewinkelbereich durch einen äußeren Kreisbogen um einen äußeren Zentralabschnitts-Mittelpunkt (Mz) gebildet ist, wobei der äußere Zentralabschnitts-Mittelpunkt (Mz) relativ zum Gelenkmittelpunkt (M) einen axialen Abstand (Offset) in eine erste axiale Richtung aufweist, und
**dass** die innere Kugelbahn (23) derart gestaltet ist, dass die innere Mittelpunktslinie im zentralen Beugewinkelbereich durch einen inneren Kreisbogen um einen inneren Zentralabschnitts-Mittelpunkt gebildet ist, wobei der innere Zentralabschnitts-Mittelpunkt relativ zum Gelenkmittelpunkt (M) einen axialen Abstand (Offset) in eine zweite axiale Richtung aufweist.

11. Gleichlaufgelenk nach einem der Ansprüche 1 bis 10,
**dadurch gekennzeichnet,**
**dass** die äußere Kugelbahn (22) derart gestaltet ist, dass die Mittelpunktslinie (A) im anschlussseitigen Bahnabschnitt (22a) des Gelenkaußenteils (12) radial außerhalb eines durch einen Referenzradius (Rr) definierten Kreisbogenabschnitts (Cr) verläuft,
wobei der Referenzradius (Rr) sich von einem Referenzradius-Mittelpunkt (Mr) zum Mittelebenen-Schnittpunkt der Mittelpunktslinie (A) mit der Gelenkmittelebene (EM) erstreckt, wobei der Referenzradius-Mittelpunkt (Mr) relativ zur Gelenkmittelebene (EM) in Richtung Öffnungsseite des Gelenkaußenteils (12) versetzt ist.

12. Gleichlaufgelenk nach einem der Ansprüche 1 bis 11,
**dadurch gekennzeichnet,**
**dass** die äußere Kugelbahn (22) derart gestaltet ist, dass die Mittelpunktslinie (A) im öffnungsseitigen Bahnabschnitt (22o) des Gelenkaußenteils (12) radial außerhalb eines durch einen Referenzradius (Rr) definierten Kreisbogenabschnitts (Cr) verläuft,
wobei der Referenzradius (Rr) sich von einem Referenzradius-Mittelpunkt (Mr) zum Mittelebenen-Schnittpunkt der Mittelpunktslinie (A) mit der Gelenkmittelebene (EM) erstreckt, wobei der Referenzradius-Mittelpunkt (Mr) relativ zur Gelenkmittelebene (EM) in Richtung Öffnungsseite des Gelenkaußenteils (12) versetzt ist.

13. Gleichlaufgelenk nach einem der Ansprüche 1 bis 12,
**dadurch gekennzeichnet,**
**dass** die innere Kugelbahn (23) in Bezug auf eine winkelhalbierende Ebene zwischen der Längsachse (L12) des Gelenkaußenteils (12) und der Längsachse (L13) des Gelenkinnenteils (13) spiegelsymmetrisch zur äußeren Kugelbahn (22) gestaltet ist.

## Claims

1. Constant velocity joint, comprising:
an outer joint part (12) with a longitudinal axis (L12) and outer ball tracks (22), wherein the outer joint part (12) has an attachment side (19) and an opening side (20),
an inner joint part (13) with a longitudinal axis (L13) and inner ball tracks (23), wherein an outer ball track (22) and an inner ball track (23) respectively form a pair of tracks (22, 23) with each other,
a torque transmitting ball (14) in each pair of tracks (22, 23),
a ball cage (15) arranged between the outer joint part (12) and the inner joint part (13) and comprising circumferentially distributed cage windows (18), each of which receiving at least one of the torque-transmitting balls (14),
wherein, with coaxially aligned longitudinal axes (L12, L13) of the inner joint part (13) and the outer joint part (12), the balls (14) in the ball cage (15) define a joint center plane (EM), wherein the two longitudinal axes (L12, L13) at articulation angles (β) enclosed between the two longitudinal axes (L12, L13) that deviate from zero degrees (0°) define a joint articulation plane (EB);
wherein, viewed in the joint articulation plane (EB), in any angular position of the constant velocity joint (11) an opening angle (δ) is formed between an outer tangent (T) applied to the outer ball track (22) in an outer contact point between the outer ball track (22) and the ball (14) and an inner tangent (T') applied to the inner ball track (23) in an inner contact point between the inner ball track (23) and the ball (14),
wherein the centers of the balls (14) each define a center line (A, A') when moving along the outer and inner ball tracks (22, 23),
**characterised in that** it comprises a first articulation angle range including articulation angles (β) that are less than fifteen degrees regarding the absolute value (-15° < β < 15°), and a second articulation angle range including articulation angles (β) that are greater than or equal to 15° regarding the absolute value (β ≤ -15° v β ≥ 15°), wherein at least one opening angle (δ) within the second articulation angle range is greater than a largest opening angle of the first articulation angle range,
wherein all ball tracks (22, 23) are configured such that within the second articulation angle range the opening angles (δ) of all balls (14) open in the same axial direction, viewed respectively in the joint articulation plane (EB),
wherein at least one of the pairs of tracks (22, 23) for an articulation angle of zero degrees (β = 0°) has an opening angle (δ) greater than zero degrees (δ > 0°),
wherein for the at least one of the pairs of tracks (22, 23) the opening angle (δ) is less than twelve degrees (δ < 12°) for all articulation angles (β) within the first articulation angle range, and wherein the opening angle (δ) increases by at least two degrees within at least a portion of the first articulation angle range.

2. Constant velocity joint of claim 1,
**characterised in that** the opening angle (δ) at the articulation angle of zero degrees (β = 0°) is greater than one degree (δ > 1°) and less than eight degrees (δ < 8°).

3. Constant velocity joint according one of claims 1 or 2,
**characterised**
**in that** the opening angle (δ) increases by at least four degrees within the first articulation angle range.

4. Constant velocity joint according to any one of claims 1 to 3,
**characterised in**
**that** eight pairs of tracks and eight balls are provided, wherein the opening angle (δ) in the first articulation angle range is at most six degrees (δ ≤ 6°), or
**that** six pairs of tracks (22, 23) and six balls (14) are provided, wherein the opening angle (δ) in the first articulation angle range is at most twelve degrees (δ ≤ 12°), and the opening angle (δ) increases by at least four degrees within the first articulation angle range.

5. Constant velocity joint according to any one of claims 1 to 4,
**characterised**
**in that** the at least one pair of tracks (22, 23) is configured such that, at any articulation angle (β) within the first articulation angle range it applies that an opening-sided opening angle (δo) at a ball (14) moving in the joint articulation plane (EB) to the opening side of the outer joint part (12) and a attachment-sidedd opening angle (δa) of a ball (14) moving at the same articulation angle (β) in the joint articulation plane (EB) to the attachment side of the outer joint part (12) open in the same axial direction.

6. Constant velocity joint according to any one of claims 1 to 5,
**characterised**
**in that** the ball cage (15) has a spherical outer face (16) for guiding the ball cage (15) with respect to an inner face of the outer joint part (12) and a spherical inner face (17) for guiding the ball cage (15) with respect to an outer face of the inner joint part (13),
wherein an axial offset is provided between a center of the spherical outer face (16) and a center of the spherical inner face (17).

7. Constant velocity joint according to any one of claims 1 to 6,
**characterised**
**in that** the centers of the balls (14) each define a center line (A, A') when moving along the outer and inner ball tracks (22, 23), wherein the center lines (A, A') each having at least two track sections (22a, 22o) with different curvature along their length.

8. A constant velocity joint according to any one of claims 1 to 7,
**characterised**
**in that** the center lines (A, A') respectively have at least one curvature change point (Pzo, Paz) within the first articulation angle range.

9. A constant velocity joint according to any one of claims 1 to 8,
**characterised**
**in that** all ball tracks (22, 23) are configured such that within the second articulation angle range the opening angles (δ) of all balls (14) open in the same axial direction, viewed respectively in the joint articulation plane (EB).

10. Constant velocity joint according to any one of claims 1 to 9,
**characterised**
**in that** the outer ball track (22) is configured such that the outer center line (A) in the central articulation angle range is formed by an outer circular arc about an outer central section center (Mz), the outer central section center (Mz) having an axial offset in a first axial direction relative to the joint center (M), and
**in that** the inner ball track (23) is configured such that the inner center line in the central articulation angle range is formed by an inner circular arc about an inner central section center, the inner central section center having an axial offset in a second axial direction relative to the joint center point (M).

11. Constant velocity joint according to any one of claims 1 to 10,
**characterised**
**in that** the outer ball track (22) is configured such that the center line (A) in the attachment-sided track section (22a) of the outer joint part (12) runs radially outside a circular arc section (Cr) defined by a reference radius (Rr),
wherein the reference radius (Rr) extends from a reference radius center (Mr) to the center plane intersection of the center line (A) with the joint center plane (EM), wherein the reference radius center (Mr) is offset with respect to the joint center plane (EM) towards the opening side of the outer joint part (12).

12. Constant velocity joint according to any one of claims 1 to 11,
**characterised**
**in that** the outer ball track (22) is configured such that the center line (A) in the opening-sided track section (22o) of the outer joint part (12) runs radially outside a circular arc section (CR) defined by a reference radius (RR),
wherein the reference radius (Rr) extends from a reference radius center (Mr) to the center plane intersection of the center line (A) with the joint center plane (EM), wherein the reference radius center (Mr) is offset with respect to the joint center plane (EM) towards the opening side of the outer joint part (12).

13. Constant velocity joint according to any one of claims 1 to 12,
**characterised**
**in that** the inner ball track (23) is configured mirror symmetrical to the outer ball track (22) with respect to an angle bisecting plane between the longitudinal axis (L12) of the outer joint part (12) and the longitudinal axis (L13) of the inner joint part (13).

## Revendications

1. Joint homocinétique comprenant :
une partie extérieure (12) du joint avec un axe longitudinal (L12) et des chemins de billes extérieurs (22), la partie extérieure (12) du joint ayant un côté de raccordement (19) et un côté d'ouverture (20),
une partie intérieure de joint (13) avec un axe longitudinal (L13) et des chemins intérieurs de billes (23),
un chemin extérieur de billes (22) et un chemin intérieur de billes (23) formant respectivement une paire de chemins (22, 23) l'un avec l'autre,
une bille de transmission de couple (14) dans chaque paire de chemins (22, 23),
une cage à billes (15), qui est disposée entre la partie extérieure de joint (12) et la partie intérieure de joint (13) et qui présente des fenêtres de cage (18) réparties sur la circonférence, qui reçoivent chacune au moins une des billes de transmission de couple (14),
les billes (14) de la cage à billes (15) définissant un plan médian d'articulation (EM) lorsque les axes longitudinaux (L12, L13) de la partie intérieure de joint (13) et de la partie extérieure de joint (12) sont orientés coaxialement, les deux axes longitudinaux (L12, L13) définissant un plan d'articulation du joint (EB) lorsque les angles de flexion (β) sont différents de zéro degré (0°) et sont compris entre les deux axes longitudinaux (L12, L13) ;
où, vu dans le plan d'articulation du joint (EB), dans chaque position angulaire du joint homocinétique (11), un angle d'ouverture (δ) est formé entre une tangente extérieure (T) qui est appliquée sur le chemin extérieur de bille (22) en un point de contact extérieur entre le chemin extérieur de bille (22) et la bille (14), et une tangente intérieure (T') qui est appliquée sur le chemin intérieur de bille (23) en un point de contact intérieur entre le chemin intérieur de bille (23) et la bille (14),
les points centraux des billes (14) définissant chacun une ligne de point central (A, A') lorsqu'elles se déplacent le long des chemins intérieurs de billes (22, 23),
**caractérisé en ce qu'**il comprend une première plage d'angles d'articulation avec des angles d'articulation (β) qui sont inférieurs en valeur absolue à quinze degrés (-15° < β < 15°), et une deuxième plage d'angles d'articulation avec des angles d'articulation (β) qui sont supérieurs en valeur absolue à 15° (β ≤ -15° v β ≥ 15°), au moins un angle d'ouverture de bouche (δ) à l'intérieur de la deuxième plage d'angles d'articulation étant supérieur à un angle d'ouverture maximal de la première plage d'angles d'articulation,
toutes les chemins à billes (22, 23) étant conçus de telle sorte qu'à l'intérieur de la deuxième plage d'angles d'articulation, les angles d'ouverture (δ) de toutes les billes (14), considérés respectivement dans le plan d'articulation du joint (EB), s'ouvrent dans la même direction axiale,
au moins une des paires de chemins (22, 23) présentant, pour un angle d'articulation de zéro degré (β = 0°), un angle d'ouverture de bouche (δ) supérieur à zéro degré (δ > 0°),
dans lequel, pour ladite au moins une paire de chemins (22, 23), l'angle d'ouverture (δ) est inférieur à douze degrés (δ < 12°) pour tous les angles d'articulation (β) à l'intérieur de la première plage d'angles d'articulation, et
l'angle d'ouverture (δ) augmentant d'au moins deux degrés au moins à l'intérieur d'une partie de la première plage d'angles d'articulation.

2. Joint homocinétique selon la revendication 1,
**caractérisé en ce**
**que** l'angle d'ouverture (δ) est supérieur à un degré (δ > 1°) et inférieur à huit degrés (δ < 8°) pour un angle d'articulation de zéro degré (β = 0°).

3. Joint homocinétique selon l'une des revendications 1 ou 2,
**caractérisé en ce**
**que** l'angle d'ouverture (δ) augmente d'au moins quatre degrés à l'intérieur de la première plage d'angles d'articulation.

4. Joint homocinétique selon l'une quelconque des revendications 1 à 3,
**caractérisé en ce**
**que** huit paires de chemins et huit billes sont prévues, l'angle d'ouverture (δ) dans la première plage d'angles d'articulation étant de six degrés au maximum (δ ≤ 6°), ou,
**que** six paires de chemins (22, 23) et six billes (14) sont prévues, l'angle d'ouverture (δ) dans la première plage d'angles de flexion étant au maximum de douze degrés (δ ≤ 12°) et l'angle d'ouverture (δ) augmentant d'au moins quatre degrés à l'intérieur de la première plage d'angles d'articulation.

5. Joint homocinétique selon l'une quelconque des revendications 1 à 4,
**caractérisé en ce**
**que** ladite au moins une paire de chemins (22, 23) est configurée de telle sorte que, pour tout angle d'articulation (β), elle s'applique à l'intérieur de la première plage d'angles d'articulation, qu'un angle d'ouverture de bouche (δo) côté ouverture d'une bille (14) se déplaçant dans le plan d'articulation (EB) vers le côté ouverture de la partie extérieure de joint (12) et un angle d'ouverture de bouche (δa) côté raccordement d'une bille (14) se déplaçant pour le même angle de flexion (β) dans le plan d'articulation (EB) vers le côté raccordement de la partie extérieure de joint (12) s'ouvrent dans la même direction axiale.

6. Joint homocinétique selon l'une quelconque des revendications 1 à 5,
**caractérisé en ce**
**que** la cage à billes (15) présente une surface extérieure sphérique (16) pour guider la cage à billes (15) par rapport à une surface intérieure de la partie extérieure de joint (12) et une surface intérieure sphérique (17) pour guider la cage à billes (15) par rapport à une surface extérieure de la partie intérieure de joint (13),
un décalage axial (offset) étant prévu entre un centre de la surface extérieure sphérique (16) et un centre de la surface intérieure sphérique (17).

7. Joint homocinétique selon l'une quelconque des revendications 1 à 6,
**caractérisé en ce**
**que** les points centraux des billes (14) définissent chacun une ligne de point central (A, A') lors du déplacement le long des chemins extérieurs de billes (22) et des chemins intérieurs de billes (23), les lignes de point central (A, A') présentant chacune sur leur longueur au moins deux portions de chemin (22a, 22o) de courbure différente.

8. Joint homocinétique selon l'une quelconque des revendications 1 à 7,
**caractérisé en ce**
**que** les lignes de point central (A, A') présentent chacune au moins un point de changement de courbure (Pzo, Paz) à l'intérieur de la première plage d'angles d'articulation.

9. Joint homocinétique selon l'une quelconque des revendications 1 à 8,
**caractérisé en ce**
**que** tous les chemins à billes (22, 23) sont configurés de telle sorte qu'à l'intérieur de la deuxième plage d'angles d'articulation, les angles d'ouverture (δ) de toutes les billes (14), respectivement observés dans le plan d'articulation du joint (EB), s'ouvrent dans la même direction axiale.

10. Joint homocinétique selon l'une quelconque des revendications 1 à 9,
**caractérisé en ce**
**que** le chemin extérieur de billes (22) est configuré de telle sorte que la ligne de point central extérieure (A) est formée dans la plage angulaire de flexion centrale par un arc de cercle extérieur autour d'un centre de section centrale extérieure (Mz), le centre de section centrale extérieure (Mz) présentant une distance axiale (offset) par rapport au centre d'articulation (M) dans une première direction axiale, et
en ce que le chemin intérieur de billes (23) est configuré de telle sorte que la ligne de point central intérieure dans la plage d'angles d'articulation centrale est formée par un arc de cercle intérieur autour d'un centre de section centrale intérieure, le centre de section centrale intérieure présentant une distance axiale (décalage) par rapport au centre d'articulation (M) dans une deuxième direction axiale.

11. Joint homocinétique selon l'une quelconque des revendications 1 à 10,
**caractérisé en ce**
**que** le chemin extérieur de billes (22) est conçu de telle sorte que la ligne de point central (A) dans la section de chemin (22a) côté raccordement de la partie extérieure de joint (12) s'étend radialement à l'extérieur d'une section d'arc de cercle (Cr) définie par un rayon de référence (Rr),
le rayon de référence (Rr) s'étendant depuis un centre de rayon de référence (Mr) jusqu'à l'intersection du plan médian de la ligne de point central (A) avec le plan médian de l'articulation (EM), le centre de rayon de référence (Mr) étant décalé par rapport au plan médian de l'articulation (EM) en direction du côté d'ouverture de la partie extérieure de joint (12).

12. Joint homocinétique selon l'une quelconque des revendications 1 à 11,
**caractérisé en ce**
**que** le chemin extérieur de billes (22) est configuré de telle sorte que la ligne de point central (A) s'étend, dans la partie de chemin (22o) côté ouverture de la partie extérieure de joint (12), radialement à l'extérieur d'une partie d'arc de cercle (Cr) définie par un rayon de référence (Rr),
le rayon de référence (Rr) s'étendant depuis un centre de rayon de référence (Mr) jusqu'à l'intersection du plan médian de la ligne de point central (A) avec le plan médian d'articulation (EM), le centre de rayon de référence (Mr) étant décalé par rapport au plan médian d'articulation (EM) en direction du côté ouverture de la partie extérieure de joint (12).

13. Joint homocinétique selon l'une quelconque des revendications 1 à 12,
**caractérisé en ce**
**que** le chemin intérieur de billes (23) est conçu de manière symétrique par rapport à un plan bissecteur entre l'axe longitudinal (L12) de la partie extérieure de joint (12) et l'axe longitudinal (L13) de la partie intérieure de joint (13) par rapport au chemin extérieur de billes (22).
